# FASCICULE DE BREVET EUROPEEN

(11) **EP 2 337 051 B1**
(45) Date de publication et mention de la délivrance du brevet: **13.04.2016**
(21) Numéro de dépôt: 10194807.3
(22) Date de dépôt: 13.12.2010
(51) Int. Cl.: H01H 25/00, E06B 9/32, H05B 37/02, G06F 3/0362

(54) **Dispositif de commande d'une installation domotique, comprenant un boîtier de télécommande muni d'une molette mobile en rotation autour d'un axe**
Steuervorrichtung einer Heimanlage, die ein Fernbedienungsgehäuse umfasst, das mit einer Wanderrolle ausgerüstet ist, die sich um eine Achse dreht
Home automation system control device consisting of a remote control housing equipped with a movable thumbwheel rotating around a spindle

(30) Priorité: 15.12.2009 FR 0959014
(43) Date de publication de la demande: 22.06.2011
(73) Titulaire: Somfy SAS, 74300 Cluses (FR)
(72) Inventeur: Mignot, Pierre, 05380 Châteauroux-les-Alpes (FR)
(74) Mandataire: Novaimo

(56) Documents cités:
- EP-A1- 1 486 640
- EP-A1- 1 748 145
- DE-A1- 19 906 386
- US-A1- 2005 146 500
- US-A1- 2007 176 714
- US-A1- 2007 234 828
- US-B1- 6 285 357

## Description

L'invention concerne un dispositif de commande d'une installation dans un bâtiment.

L'installation comprend un boîtier de télécommande muni d'une molette rotative autour d'un arbre et apte à délivrer des signaux différents selon le sens de rotation autour de cet arbre. De plus, un appui sur la molette provoque un déplacement de l'arbre apte à délivrer d'autres signaux.

Le brevet EP 1 486 640 décrit un dispositif de commande comprenant une molette, appliqué à un actionneur d'écran de protection solaire muni de lames orientables. La rotation de la molette permet en particulier d'envoyer des ordres d'orientation des lames, tandis que deux touches de commande permettent d'envoyer des ordres de déploiement ou de repliement du tablier sur lequel sont montées les lames orientables.

Dans une variante de réalisation, un appui sur la molette permet d'envoyer un ordre d'arrêt. L'actionnement de ce troisième contact alors que le système est au repos peut être interprété comme un ordre d'aller dans une position intermédiaire prédéfinie.

La rotation de la molette, sans appui sur celle-ci, permet de commander une rotation des lames à une première vitesse tandis que la rotation de la molette, avec appui sur celle-ci, d'envoyer des ordres d'orientation des lames à une deuxième vitesse réduite par rapport à la première. Une variante de réalisation est encore décrite pour le cas où l'écran nécessite deux actionneurs respectivement pour le déploiement et repliement de l'écran et pour l'orientation des lames. Dans ce cas, la rotation de la molette, sans appui sur celle-ci, permet de commander le premier moteur tandis que la combinaison simultanée d'un appui sur la molette et de la rotation de celle-ci dans un sens ou dans l'autre permet de commander le deuxième moteur (et donc l'orientation des lames).

Un même contact électrique peut donc être activé par la rotation de la molette dans un sens pour l'émission de plusieurs ordres : la distinction entre commandes est permise par l'actionnement d'un troisième contact provoqué par l'appui sur la molette.

Un inconvénient d'un tel dispositif selon l'art antérieur est de provoquer facilement des fausses manoeuvres : il est en effet malaisé de provoquer simultanément le mouvement d'appui et un mouvement de rotation. Dans un premier cas, la rotation précédant l'appui, le récepteur d'ordres interprète successivement un ordre de translation puis un ordre d'orientation des lames. Dans un deuxième cas, l'appui précédant la rotation, le récepteur d'ordres interprète successivement un ordre d'aller en position intermédiaire puis un ordre d'orientation des lames. Il est bien-entendu possible d'éliminer de tels dysfonctionnements en introduisant un filtrage des ordres à caractère transitoire, évitant ainsi tout comportement erratique, mais la réactivité du système s'en trouve diminuée. Par ailleurs, les modes de réalisation proposés dans l'art antérieur nécessitent une double interface de commande pour différencier les ordres d'orientation et de translation, ce qui n'est guère économe en prix et en encombrement.

On connaît du document DE 199 06 386 un téléphone mobile à molette mobile selon un axe perpendiculaire à son axe de rotation. Il permet la navigation (par rotation de la molette) et la sélection (par déplacement de la molette perpendiculairement à son axe) dans différents menus. Cependant, avant ou après action de déplacement de la molette perpendiculairement à son axe de rotation, la rotation de la molette dans un même sens a la même signification : déplacer un curseur vers le bas, respectivement vers le haut, dans un menu. L'activation de fonctions du téléphone est quant à elle provoquée par les mouvements de la molette perpendiculairement à son axe.

On connaît du document US 2007/234828 un dispositif de saisie à molette mobile selon plusieurs directions en translation.

On connaît encore du document US 2005/0146500 un dispositif de pointage à molette mobile selon un axe perpendiculaire à son axe de révolution.

Le but de l'invention est de fournir un dispositif de commande remédiant aux inconvénients ci-dessus et améliorant les dispositifs de commande connus de l'art antérieur. En particulier, l'invention permet de réaliser un dispositif simple, compact dont l'utilisation est aisée et intuitive. L'invention permet en outre de réaliser un dispositif permettant de commander plusieurs équipements domotiques.

Selon l'invention, le dispositif de commande d'une installation d'un bâtiment, comprend un boîtier de télécommande muni d'une molette mobile en rotation autour d'un axe et mobile selon au moins un autre degré de mobilité. Il est caractérisé en ce qu'il comprend une mémoire dont l'état change au moins à chaque transmission d'un premier signal d'appui provoqué par une troisième action de déplacement de la molette selon l'au moins un autre degré de mobilité et des moyens d'émission d'ordres tels qu'une première action de rotation de la molette dans un premier sens autour de l'axe provoque un premier ordre de commande, ou un troisième ordre de commande en fonction de l'état de la mémoire et/ou tels qu'une deuxième action de rotation de la molette dans un deuxième sens autour de l'axe provoque un deuxième ordre de commande, ou un quatrième ordre de commande en fonction de l'état de la mémoire. Le premier, deuxième, troisième, quatrième ordre de commande concerne respectivement une modification d'une grandeur de consigne d'un équipement domotique :
- progressivement croissante,
- progressivement décroissante,
- vers une valeur extrême supérieure,
- vers une valeur extrême inférieure,
ou
le premier ordre de commande et le deuxième ordre de commande s'adressent à un premier récepteur d'ordres raccordé à un premier équipement domotique, tandis que le troisième ordre de commande et le quatrième ordre de commande s'adressent à un deuxième récepteur d'ordres raccordé à un deuxième équipement domotique, les premier et troisième ordres de commande concernant chacun une modification progressivement croissante d'une grandeur de consigne et les deuxième et quatrième ordres de commande concernant chacun une modification progressivement décroissante d'une grandeur de consigne.

Le dispositif peut produire des ordres de commande d'un équipement domotique de type actionneur d'un écran motorisé de protection solaire comprenant un tablier avec lames orientables et à déploiement ajustable, la grandeur de consigne étant l'ouverture de l'écran.

Le premier ordre de commande peut être un ordre d'orientation des lames dans un premier sens, le deuxième ordre de commande peut être un ordre d'orientation des lames dans un deuxième sens, le troisième ordre de commande peut être un ordre de déploiement du tablier et le quatrième ordre peut être un ordre de repliement du tablier.

Le dispositif peut produire des ordres de commande d'un équipement domotique de type vitrage à transmission réglable, la grandeur de consigne étant la transmission du vitrage ou le dispositif peut produire des ordres de commande d'un équipement domotique de type dispositif d'éclairage, la grandeur de consigne étant la puissance d'éclairage ou le dispositif peut produire des ordres de commande d'un équipement domotique de type dispositif de chauffage-climatisation, la grandeur de consigne étant la température.

La mémoire peut être de type monostable, c'est-à-dire comprenant un premier état et un deuxième état, le deuxième état étant activé par le premier signal d'appui, la mémoire retournant automatiquement dans le premier état après une temporisation prédéterminée.

La mémoire peut être de type bistable, c'est-à-dire comprenant un premier état et un deuxième état, le passage d'un état à l'autre étant consécutif à l'application du premier signal d'appui.

La mémoire peut comprendre un registre à décalage avec n états stables, le premier signal d'appui provoquant le passage d'un état stable quelconque à un état stable suivant du registre et la mémoire repassant dans un premier état stable lorsque le premier signal d'appui est appliqué n fois à la mémoire.

Un deuxième signal d'appui peut être activé lors d'une quatrième action de déplacement de la molette selon l'au moins un autre degré de mobilité, la quatrième action étant différente de la troisième action, par exemple la durée de la quatrième action est supérieure à la durée de la troisième action et/ou la quatrième action est exercée selon une direction différente de celle de la troisième action et/ou la quatrième action est exercée selon un sens différent de celui de la troisième action.

Le deuxième signal d'appui peut agir également sur l'état de la mémoire.

Le deuxième signal d'appui peut être interprété par le dispositif comme un ordre de commande d'arrêt d'exécution d'un ordre en cours d'exécution.

L'au moins un autre degré de mobilité peut être une translation orientée selon une direction sensiblement parallèle à l'axe.

L'au moins un autre degré de mobilité peut être une rotation de l'axe de rotation de la molette dans un plan sensiblement perpendiculaire à un plan médian de la molette.

L'invention sera mieux comprise à la lecture de la description qui va suivre, donnée uniquement à titre d'exemple et faite en se référant aux dessins annexés sur lesquels :
La figure 1 représente une installation domotique comprenant un premier mode de réalisation de dispositif de commande selon l'invention.
La figure 2 représente une variante de mémoire pouvant être utilisée dans le dispositif de commande selon l'invention.
La figure 3 représente un deuxième mode de réalisation d'un dispositif de commande selon l'invention.
La figure 4 représente un troisième mode de réalisation d'un dispositif de commande selon l'invention.
La figure 5 représente un quatrième mode de réalisation d'un dispositif de commande selon l'invention.
La figure 6 représente un cinquième mode de réalisation d'un dispositif de commande selon l'invention.

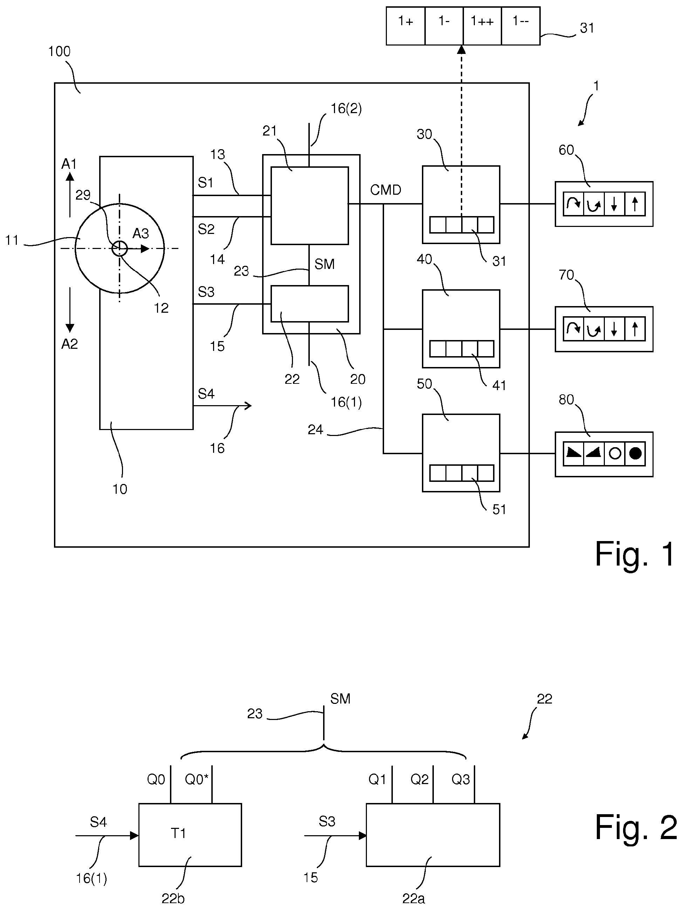

La figure 1 représente un exemple d'installation domotique d'un bâtiment, laquelle installation 1 est munie d'un dispositif de commande 100 selon l'invention et comprend trois actionneurs de type domotique. Un premier actionneur 60 est un écran motorisé de protection solaire, semblable à celui décrit dans l'art antérieur mentionné précédemment, c'est-à-dire comprenant un tablier muni de lames orientables. L'actionneur est apte à déployer ou à replier le tablier, selon un mouvement de translation des lames, et à orienter les lames autour de leur axe principal. Il est donc possible de provoquer une plus ou moins grande ouverture de l'écran par combinaison de mouvements d'orientation des lames et de repliement ou déploiement du tablier. L'ouverture de l'écran est ainsi une grandeur de consigne du premier actionneur.

Un deuxième actionneur 70 est identique au premier actionneur.

Un troisième actionneur 80 est un actionneur d'éclairage ou un actionneur de chauffage-climatisation ou encore un actionneur de vitrage à transmission variable. S'agissant d'un actionneur d'éclairage, une grandeur de consigne est la puissance lumineuse émise (ou encore la puissance électrique absorbée, ou le courant électrique absorbé). S'agissant d'un actionneur de chauffage-climatisation, une grandeur de consigne est une température de confort. S'agissant d'un vitrage à transmission variable, par exemple un vitrage électrochrome, une grandeur de consigne est le coefficient de transmission lumineuse et/ou énergétique du vitrage.

Par actionneur, il faut donc entendre tout équipement domotique apte à assurer une fonction de confort ou de sécurité dans un bâtiment ou aux abords de ce bâtiment (jardin, piscine).

Chaque actionneur est raccordé fonctionnellement à un récepteur d'ordres du dispositif de commande. Un premier récepteur d'ordres 30 est raccordé au premier actionneur. Un deuxième récepteur d'ordres 40 est raccordé au deuxième actionneur. Un troisième récepteur d'ordres 50 est raccordé au troisième actionneur. Chaque récepteur d'ordres 30-50 contient respectivement un premier décodeur 31, un deuxième décodeur 41 et un troisième décodeur 51, le rendant apte à recevoir au moins quatre ordres de commande pour provoquer une modification de la grandeur de consigne de l'actionneur. Selon l'ordre reçu et décodé, cette modification est :
- soit progressivement croissante, par exemple variant par incréments positifs par rapport à la valeur actuelle,
- soit progressivement décroissante, par exemple variant par incréments négatifs par rapport à la valeur actuelle,
- soit à valeur supérieure, c'est à dire contrainte à prendre une valeur de limite supérieure, ou « aller à valeur extrême supérieure »
- soit à valeur inférieure, c'est à dire contrainte à prendre une valeur de limite inférieure, ou « aller à valeur extrême inférieure ».

Ainsi, dans le cas d'un actionneur d'éclairage, deux ordres distincts permettent une croissance ou décroissance de la puissance lumineuse (gradation ou « dimming ») tandis que deux ordres distincts donnent une consigne nulle (0%) ou une consigne maximum (100%). Dans le cas d'un actionneur de chauffage-climatisation, deux ordres distincts permettent une croissance ou décroissance, par exemple par pas d'un demi-degré Celsius, de la température de confort désirée, tandis que deux ordres distincts permettent d'atteindre des valeurs supérieure et inférieure qui sont les limites d'une plage de confort prédéterminée (par exemple 26°C et 18°C).

Dans le cas d'un actionneur pour écran mobile à lames orientables, l'art antérieur décrit l'existence de plusieurs types d'écrans à simple ou double commande. La variation de la grandeur de consigne peut alors être obtenue par des moyens distincts ou par une combinaison de ces moyens.

Par exemple, pour quatre ordres adressables au premier actionneur (noté 1), un premier ordre de commande, noté 1+, est un ordre d'orientation des lames dans un premier sens, un deuxième ordre de commande, noté 1-, est un ordre d'orientation des lames dans un deuxième sens, un troisième ordre de commande, noté 1++, est un ordre de déploiement complet du tablier, un quatrième ordre, noté 1--, est un ordre de repliement complet du tablier.

Ces quatre mouvements sont symbolisés, dans chaque actionneur 60 et 70, par deux flèches en rotation de sens opposés, et par deux flèches en translation de sens opposés.

Les quatre actions réalisables par l'actionneur 80 sont symbolisées par : un triangle croissant et par un triangle décroissant, représentatifs de modifications fines de la grandeur de consigne, un rond vide et un rond plein, représentatifs des valeurs extrêmes de la grandeur de consigne.

Le dispositif de commande comprend un boîtier de télécommande 10, muni d'une molette 11 montée sur un arbre 12 et mobile en rotation autour d'un axe 29. A l'aide de son doigt, un utilisateur peut manoeuvrer la molette en rotation selon un premier sens de rotation, soit une première action A1, ou respectivement selon un deuxième sens de rotation, soit une deuxième action A2. Ce déplacement de rotation est déterminé grâce à un moyen de détection de l'existence d'une rotation (non représenté) et grâce à un moyen de détection du sens de rotation (non représenté). Ces moyens de détection peuvent être confondus. Dans le cas d'une rotation de la molette dans le premier sens, le boîtier de télécommande active un premier signal de rotation S1 sur une première ligne de signal 13 et, dans le cas d'une rotation de la molette dans le deuxième sens, le boîtier de télécommande active un deuxième signal de rotation S2 sur une deuxième ligne de signal 14.

La molette est également mobile selon au moins un autre degré de mobilité. Ainsi, lors d'un déplacement de la molette selon cet autre degré de mobilité, provoqué, par exemple, par un appui du doigt sur la molette perpendiculairement à l'axe constituant une troisième action A3, un premier signal d'appui S3 est activé sur une troisième ligne de signal 15. En effet, ce déplacement de translation est déterminé grâce à un moyen de détection (non représenté).

Les lignes de signal raccordent le boîtier de télécommande à un interpréteur 20 pour transmettre à l'interpréteur les signaux issus du boîtier de télécommande. L'interpréteur comprend une mémoire 22 raccordée en entrée à la troisième ligne de signal. Il comprend en outre un codeur 21 raccordé en entrées aux deux premières lignes de signal et à une sortie 23 de la mémoire délivrant l'état de la mémoire. Le codeur tient compte de l'état SM de la mémoire : il fournit sur un bus de sortie 24 un premier ordre de commande ou un troisième ordre de commande (respectivement un deuxième ordre de commande ou un quatrième ordre de commande) selon l'état de la mémoire lors de l'activation du premier signal de rotation (respectivement du deuxième signal de rotation).

Autrement dit, l'ordre de commande CMD émis par l'ensemble de l'interpréteur est conditionné par une action passée (et non actuelle) d'appui sur la molette, mémorisée dans la mémoire.

Le bus de sortie du codeur est raccordé en entrée sur chacun des récepteurs d'ordres, de manière à leur transmettre, ou à transmettre au seul récepteur d'ordres concerné, au moins un des quatre ordres de commande CMD.

La mémoire 22 est apte à changer d'état SM lors de chaque activation et transmission du premier signal d'appui. Selon les variantes de réalisation, cette mémoire est de type monostable, bistable, ou de type registre à décalage. Le changement d'état a lieu par exemple en fin de transmission du premier signal d'appui, donc au moment où l'utilisateur cesse d'exercer la troisième action.

Dans une première variante, la mémoire est de type monostable. L'état stable est un premier état. Dans ce premier état, le codeur interprète le premier signal de rotation comme ordre de modification progressivement croissante et le deuxième signal de rotation comme ordre de modification progressivement décroissante, et fournit par exemple des ordres d'orientation des lames dans le sens voulu s'il est raccordé simplement au premier actionneur. Un voyant lumineux raccordé à la sortie d'état de la mémoire, non représenté, peut indiquer à l'utilisateur l'état de la mémoire afin qu'il soit averti qu'une action de rotation sur la molette sera interprétée comme étant de type : « variation progressive » ou de type : « aller à valeur extrême ».

L'activation du premier signal d'appui fait passer la mémoire dans un deuxième état, de durée prédéterminée, par exemple 10 secondes. Dans ce deuxième état, le codeur interprète le premier signal de rotation comme ordre de modification à valeur supérieure et le deuxième signal de rotation comme ordre de modification à valeur inférieure, et fournit par exemple des ordres de repliement ou déploiement du tablier dans le sens voulu s'il est raccordé simplement au premier actionneur. La mémoire repasse spontanément dans le premier état à l'issue de la temporisation.

Après une période d'inactivité, l'utilisateur est donc assuré de prendre en main un boîtier de télécommande pour lequel la rotation de la molette correspond à la fonction de variation progressive de la consigne, ce qui est l'usage le plus courant : au cours d'une journée, il est normal de procéder à plusieurs ajustements fins, soit parce que la position du soleil varie par rapport à la façade, soit du fait de passages nuageux.

Dans une deuxième variante, la mémoire est de type bistable. Le codeur se prête indifféremment aux deux fonctionnements précédents sans que l'un soit privilégié par rapport à l'autre. Un voyant lumineux raccordé à la sortie d'état de la mémoire, non représenté, peut indiquer à l'utilisateur l'état de la mémoire afin qu'il soit averti qu'une action de rotation sur la molette sera interprétée comme étant de type : « variation progressive » ou de type : « aller à valeur extrême ».

Dans une troisième variante, la mémoire est de type registre à décalage : elle présente plusieurs sorties dont une seule est active. La sortie active se déplace d'une sortie à la sortie suivante lors de chaque activation du premier signal d'appui. La mémoire comprend donc n états stables, le premier signal d'appui provoquant le passage d'un état stable quelconque à un état stable suivant et la mémoire repassant dans un premier état stable lorsque le premier signal d'appui est appliqué n fois à la mémoire.

Cette variante est utilisée pour modifier non pas le contenu des ordres de commande mais leur destinataire. Ainsi, le codeur interprète toujours le premier signal de rotation comme ordre de modification progressivement croissante et le deuxième signal de rotation comme ordre de modification progressivement décroissante, mais l'état de la mémoire oriente l'ordre de commande soit vers le premier actionneur, soit vers le deuxième actionneur, soit vers le troisième actionneur, dans le cas d'une mémoire à trois états. Avantageusement, un moyen d'information informe l'utilisateur sur l'actionneur sélectionné. Le moyen d'information comprend par exemple des diodes électroluminescentes activées par chaque sortie de la mémoire.

Alternativement, la mémoire comprend un nombre d'états stables égal à deux fois le nombre d'actionneurs. Dans ce cas, le fonctionnement bistable peut s'appliquer à chaque actionneur.

Préférentiellement, les trois premiers états stables successifs sont ceux relatifs à l'interprétation des signaux de rotation S1 et S2 en ordres de modification progressive, pour chacun des trois actionneurs successivement. Les trois états stables suivants sont ceux relatifs à l'interprétation des signaux S1 et S2 en ordres d'aller en valeur extrême.

Le premier signal d'appui peut être activé selon une condition de durée sur le déplacement de la molette selon l'au moins un autre degré de mobilité, notamment sur le déplacement de l'arbre de la molette. Préférentiellement, le premier signal d'appui n'est activé que si la durée d'appui est inférieure à une première durée seuil (T1), par exemple 1 seconde, et la troisième action A3 est donc définie par une durée inférieure à T1.

Dans cette variante préférée, le boîtier de télécommande est muni d'une quatrième ligne de signal 16, raccordée selon les options à la mémoire ou au codeur. Il active sur cette ligne un deuxième signal d'appui S4 quand la durée d'appui est supérieure à une seconde, ce qui définit une quatrième action A4. Alternativement, le deuxième signal d'appui pourrait être activé lors d'un double appui dans un intervalle de temps donné.

Dans une première option, la quatrième ligne de signal 16(1) est raccordée à la mémoire.

La mémoire 22 est représentée en figure 2 selon un mode de réalisation de cette première option.

Elle comprend d'une part un registre à décalage 22a à changement d'état lors de chaque activation du premier signal d'appui S3 (à chaque appui bref), comme précédemment, trois sorties Q1, Q2 et Q3 passant successivement à l'état actif. Elle comprend également une bascule monostable 22b, raccordée à la quatrième ligne de signal et changeant d'état lors d'une activation du deuxième signal d'appui S4 (suite à un appui long), une première sortie Q0 étant active dans un premier état, de repos, et une sortie complémentaire Q0* étant active pendant une durée T1 après activation du deuxième signal d'appui.

L'état SM de la mémoire contient les informations d'état du registre à décalage et de la bascule, regroupées dans une ligne d'état 23 appliquée au codeur.

Lors d'une activation du premier signal de rotation (ou respectivement du deuxième signal de rotation), le codeur délivre un ordre de commande CMD dépendant de l'état SM de la mémoire : l'état du registre à décalage est interprété pour déterminer à quel actionneur l'ordre de commande sera appliqué, tandis que l'état de la bascule monostable est interprété pour déterminer s'il s'agit d'un ordre de modification progressive ou un ordre d'aller en valeur extrême.

L'intérêt de cette première option et de ce mode de réalisation de la mémoire est de permettre une ergonomie plus adaptée aux besoins d'un utilisateur : comme il a été souligné plus haut, les ajustements fins des grandeurs de consigne sont les plus nombreux au cours d'une journée ou d'une journée à l'autre. Ainsi, le dispositif de commande est spontanément dans un état tel que la rotation de la molette permet des ajustements fins, le passage d'un actionneur à l'autre se faisant par appui bref sur la molette.

Plus rarement, il est souhaité amener un des actionneurs à prendre une grandeur de consigne extrême : dans ce cas un appui plus long, ou un double appui dans un intervalle de temps donné, sur la molette permet de passer dans un mode où le codeur interprète les mouvements rotatifs de la molette comme relatifs à des ordres d'aller en position extrême. De nouveau, des appuis brefs sur la molette permettent de sélectionner l'actionneur désiré. Au bout d'une durée prédéterminée T1, le codeur interprète de nouveau les deux premiers signaux S1 et S2 comme étant relatifs à des commandes de variation progressive.

Dans une deuxième option, la quatrième ligne de signal 16(2) est raccordée au décodeur. Quand cette ligne est activée, le décodeur délivre un signal d'arrêt vers le récepteur d'ordres. Dans ce cas, un appui bref sur la molette correspond à un changement de types d'ordres pour un même actionneur, si la mémoire est de type monostable ou bistable, et correspond à un changement d'actionneur, si la mémoire est de type registre à décalage.

Il est possible de combiner la première et la deuxième option, par exemple en introduisant un troisième signal d'appui S5 dont l'activation résulte d'un appui sur la molette de durée supérieure à une valeur T2, supérieure à T1, par exemple 3 secondes (ou un double appui bref dans un intervalle de temps donné). Le deuxième signal d'appui S4 est alors exclusivement utilisé pour l'arrêt, tandis que le troisième signal d'appui S5 (en remplacement du signal S4) agit sur la bascule monostable de la mémoire, comme dans la première option de la figure 2. Selon cette combinaison, on privilégie les ordres d'ajustements fins par rotation de la molette. Un appui bref sur la molette (inférieur à une seconde) permet de passer d'un actionneur au suivant. Un appui plus long sur la molette (compris entre 1 et 3 secondes) permet d'envoyer un signal d'arrêt. Un appui supérieur à 3 secondes permet une interprétation des deux premiers signaux comme relatifs à des ordres d'aller en valeur extrême.

Ces durées sont données à titre indicatif. L'appui bref peut par exemple être borné par 0.2 secondes au lieu d'une seconde, ce qui évite de pénaliser le temps de réaction à un signal d'arrêt.

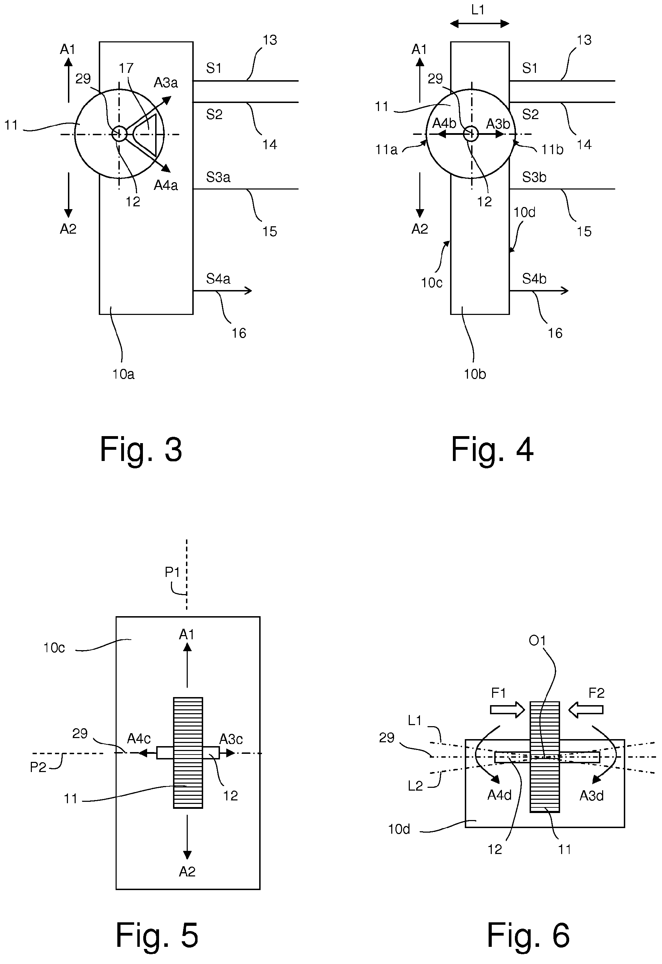

La figure 3 représente de manière schématique et dans une position de repos un deuxième mode de réalisation d'un dispositif selon l'invention comprenant un boîtier de télécommande dans lequel le premier signal d'appui et le deuxième signal d'appui sont distingués non pas par la durée des appuis mais par la direction des appuis.

Le boîtier de télécommande 10a comprend de nouveau une molette 11 montée sur un arbre 12, mobile en translation lors d'un appui et ramené en position de repos par un moyen élastique non représenté. Un relief 17 du boîtier de télécommande, en forme de coin, oriente le déplacement de l'arbre, et donc celui de la molette, selon un des bords du relief, en fonction de l'inclinaison de l'appui par rapport à la bissectrice de l'angle du coin. Selon cette inclinaison de l'appui, on est dans le cas d'une troisième action A3a, activant le premier signal d'appui S3a, ou dans le cas d'une quatrième action A4a, activant le deuxième signal d'appui S4a. Ainsi, le dispositif de commande, par exemple le boîtier de télécommande, comprend des moyens de détection de déplacement de la molette pour détecter une troisième action A3a et des moyens de détection de déplacement de la molette pour détecter une quatrième action A4a. Ces moyens peuvent consister en deux interrupteurs distincts.

Alternativement, le dispositif de commande, notamment le boîtier de télécommande, peut comprendre une molette mobile en translation selon deux directions : une première au moins sensiblement perpendiculaire à l'arbre 12 et une deuxième au moins sensiblement parallèle à l'arbre 12. Des moyens élastiques peuvent permettre de ramener la molette dans une position de repos relativement à ces directions de déplacement,. Ainsi, selon l'action exercée par l'utilisateur, la molette est déplacée au moins sensiblement perpendiculaire à l'arbre 12 et le premier signal d'appui S3a est activé ou la molette est déplacée au moins sensiblement parallèlement à l'arbre 12 et le deuxième signal d'appui S4a est activé. Pour ce faire, le dispositif de commande, par exemple le boîtier de télécommande, comprend des moyens de détection de déplacement de la molette pour détecter une troisième action et des moyens de détection de déplacement de la molette pour détecter une quatrième action. Ces moyens peuvent consister en deux interrupteurs distincts.

De préférence, la molette peut être déplacée au moins sensiblement parallèlement à l'arbre 12 selon deux sens. De préférence encore, cette action de déplacement permet de réaliser la sélection de l'actionneur a commander. Avantageusement, une série d'actions dans le premier sens permet la séquence de modification de sélection suivantes : actionneur 60 -> actionneur 70 -> actionneur 80, alors qu'une série d'actions dans le deuxième sens permet la séquence de modification de sélection suivantes : actionneur 60 -> actionneur 80 -> actionneur 70.

La figure 4 représente de manière schématique et dans une position de repos un troisième mode de réalisation d'un dispositif selon l'invention comprenant un boîtier de télécommande 10b dans lequel le premier signal d'appui et le deuxième signal d'appui sont distingués par le sens des appuis.

Le boîtier de télécommande 10b comprend de nouveau une molette 11 montée sur un arbre 12, mobile en translation lors d'un appui et ramenée en position de repos par un moyen élastique non représenté.

L'épaisseur L1 du boîtier de télécommande est inférieure au diamètre de la molette, et des ouvertures (non référencées) permettent un dépassement de la molette de part et d'autre du boîtier de télécommande.

Ainsi, une première portion de molette 11a est accessible sur une première face 10c du boîtier de télécommande, tandis qu'une deuxième portion de molette 11 b est accessible sur une deuxième face 10d du boîtier de télécommande. La première portion est par exemple plus importante que la deuxième portion, du fait de dépassements inégaux.

Quand le boîtier de télécommande est tenu dans la main, le pouce de l'utilisateur est par exemple utilisé pour des mouvements de rotation de la molette et pour provoquer un appui dans un premier sens, tandis que l'index de l'utilisateur est utilisé pour provoquer un appui dans un deuxième sens, opposé au premier sens.

Selon le sens de l'appui, on est dans le cas d'une troisième action A3b, activant le premier signal d'appui S3b, ou dans le cas d'une quatrième action A4b, activant le deuxième signal d'appui S4b.

La figure 5 représente de manière schématique et dans une position de repos un quatrième mode de réalisation d'un dispositif selon l'invention comprenant un boîtier de télécommande 10c et dans lequel le premier signal d'appui et le deuxième signal d'appui sont distingués par le sens des appuis dans une direction parallèle à l'arbre 12c, cette direction étant celle décrite plus haut, dans l'alternative au deuxième mode de réalisation. Cette fois, l'appui exercé par un doigt de l'utilisateur s'exerce sensiblement parallèlement à l'arbre pour donner naissance à une troisième action A3c ou à une quatrième action A4c. Ces actions permettent l'activation d'un premier signal d'appui S3c ou d'un deuxième signal d'appui S4c, non représentés. Pour ce faire, le dispositif de commande, par exemple le boîtier de télécommande, comprend des moyens de détection de déplacement de la molette pour détecter une troisième action et des moyens de détection de déplacement de la molette pour détecter une quatrième action. Ces moyens peuvent consister en deux interrupteurs distincts.

Sur la figure 5 sont représentées en trait pointillé : la trace d'un plan médian P1 de la molette, perpendiculaire à l'axe 29 de rotation et la trace d'un plan P2 perpendiculaire au plan médian P1 et contenant l'axe 29.

La figure 6 représente de manière schématique et dans une position de repos un cinquième mode de réalisation d'un dispositif selon l'invention comprenant un boîtier de télécommande 10d et dans lequel le premier signal d'appui et le deuxième signal d'appui sont distingués par le sens des appuis dans une direction sensiblement parallèle à l'arbre 12d, comme dans le quatrième mode de réalisation.

Dans ce mode de réalisation, l'ensemble constitué par la molette 11 et l'arbre 12 est susceptible de pivoter, avec un débattement limité, dans le plan P2 défini précédemment. De ce fait, l'axe 29 est mobile entre deux positions extrêmes référencées L1 et L2.

L'appui exercé par un doigt de l'utilisateur s'exerce sensiblement parallèlement à la position de repos de l'arbre, comme représenté par une première flèche pleine F1 ou par une deuxième flèche pleine F2, pour donner naissance à des couples provoquant une troisième action de pivotement A3d ou à une quatrième action de pivotement A4d. Ces actions permettent l'activation d'un premier signal d'appui S3d ou d'un deuxième signal d'appui S4d, non représentés. Pour ce faire, le dispositif de commande, par exemple le boîtier de télécommande, comprend des moyens de détection de déplacement de la molette pour détecter une troisième action et des moyens de détection de déplacement de la molette pour détecter une quatrième action. Ces moyens peuvent consister en deux interrupteurs distincts, ou encore en des capteurs d'effort.

En définitive, le deuxième signal d'appui S4 ; S4a ; S4b ; S4c, S4d est activé lors d'une quatrième action A4 ; A4a ; A4b ; A4c ; A4d :
- soit d'une durée supérieure à la durée de la troisième action A3,
- soit d'une direction différente et/ou d'un sens différent de la troisième action.

Il est bien entendu possible d'inverser les relations décrites plus haut entre actions et signaux. Par exemple, une nouvelle variante de réalisation du boîtier de télécommande peut être conçue de manière à activer un premier signal d'appui lors d'un appui dans une direction parallèle à l'arbre et à activer un deuxième signal d'appui lors d'un appui perpendiculaire à l'arbre.

De même, les différents modes de réalisation décrits plus haut peuvent être combinés entre eux.

Toutes les liaisons précisées dans la présente description sont des liaisons de type fonctionnel, pouvant être réalisées par les différents moyens connus de l'homme du métier : liaisons filaires, infrarouge, radiofréquences ou par courants porteurs. Les moyens de communication (par exemple émetteurs radiofréquences ou récepteurs radiofréquences) ne sont pas décrits.

De même, les différents moyens décrits le sont au sens fonctionnel et peuvent être regroupés dans différentes entités physiques. Par exemple, les récepteurs d'ordres et les actionneurs peuvent former une même entité physique. De même, le boîtier de télécommande et l'interpréteur peuvent former une même entité physique. Comme décrit dans l'art antérieur, les moyens d'interprétation peuvent être partagés entre ces entités physiques.

Ainsi, la mémoire 22 peut appartenir à un microcontrôleur logé dans une télécommande nomade et réalisant l'analyse des signaux issus de la molette.

Grâce au dispositif de commande selon l'invention, différents types d'équipements domotiques peuvent être commandés en utilisant une seule interface de commande. De plus, il est aisé de passer de la commande d'un équipement à celle d'un autre équipement. Enfin, le dispositif de commande selon l'invention satisfait un besoin d'une multiplicité de commandes vers différents destinataires à partir d'une interface simple.

De préférence, les moyens d'émission d'ordres émettent directement un ordre de commande d'un équipement domotique de l'installation suite à une détection de rotation de la molette, l'utilisateur n'ayant besoin d'exécuter aucune action de confirmation, c'est-à-dire qu'aucune autre action de l'utilisateur n'est nécessaire à l'émission de l'ordre de commande. Ainsi, c'est véritablement l'action de rotation de la molette qui déclenche, au niveau des moyens d'émission d'ordres, l'émission d'un ordre de commande d'un équipement domotique. Par ailleurs, l'émission de l'ordre de commande est de préférence réalisée sans délai suite à la rotation de la molette. Par exemple, l'émission d'un ordre de commande est réalisée en moins de 1 seconde ou en moins de 0,5 seconde après détection de la rotation de la molette.

## Revendications

1. Dispositif de commande (100) comprenant un boîtier de télécommande (10 ; 10a ; 10b ; 10c ; 10d) muni d'une molette (11) mobile en rotation autour d'un axe (29) et mobile selon au moins un autre degré de mobilité, le dispositif de commande comprenant une mémoire dont l'état change au moins à chaque transmission d'un premier signal d'appui (S3 ; S3a ; S3b ; S3c, S3d ; S4 ; S4a ; S4b ; S4c, S4d) provoqué par une troisième action (A3 ; A3a ; A3b ; A3c, A3d ; A4 ; A4a ; A4b ; A4c, A4d) de déplacement de la molette selon l'au moins un autre degré de mobilité, **caractérisé en ce que** le dispositif de commande est un dispositif de commande (100) d'une installation d'un bâtiment (1), **en ce que** le dispositif de commande comprend des moyens d'émission d'ordres tels qu'une première action (A1) de rotation de la molette dans un premier sens autour de l'axe provoque un premier ordre de commande (CMD1), ou un troisième ordre de commande (CMD1') en fonction de l'état de la mémoire et/ou tels qu'une deuxième action (A2) de rotation de la molette dans un deuxième sens autour de l'axe provoque un deuxième ordre de commande (CMD2), ou un quatrième ordre de commande (CMD2') en fonction de l'état de la mémoire et **en ce que** :
• le premier, deuxième, troisième, quatrième ordre de commande concerne respectivement une modification d'une grandeur de consigne d'un équipement domotique (60, 70, 80) :
- progressivement croissante,
- progressivement décroissante,
- vers une valeur extrême supérieure,
- vers une valeur extrême inférieure,
ou
• le premier ordre de commande et le deuxième ordre de commande s'adressent à un premier récepteur d'ordres raccordé à un premier équipement domotique, tandis que le troisième ordre de commande et le quatrième ordre de commande s'adressent à un deuxième récepteur d'ordres raccordé à un deuxième équipement domotique, les premier et troisième ordres de commande concernant chacun une modification progressivement croissante d'une grandeur de consigne et les deuxième et quatrième ordres de commande concernant chacun une modification progressivement décroissante d'une grandeur de consigne,
ou
• le dispositif produit des ordres de commande d'un équipement domotique de type actionneur d'un écran motorisé de protection solaire comprenant un tablier avec lames orientables et à déploiement ajustable, la grandeur de consigne étant l'ouverture de l'écran, le premier ordre de commande étant un ordre d'orientation des lames dans un premier sens (1+), le deuxième ordre de commande étant un ordre d'orientation des lames dans un deuxième sens (1-), le troisième ordre de commande étant un ordre de déploiement du tablier (1++) et le quatrième ordre étant un ordre de repliement du tablier (1--).

2. Dispositif selon la revendication précédente, **caractérisé en ce qu'**il produit des ordres de commande d'un équipement domotique de type actionneur d'un écran motorisé de protection solaire comprenant un tablier avec lames orientables et à déploiement ajustable, la grandeur de consigne étant l'ouverture de l'écran.

3. Dispositif selon l'une des revendications précédentes, **caractérisé en ce qu'**il produit des ordres de commande d'un équipement domotique de type vitrage à transmission réglable, la grandeur de consigne étant la transmission du vitrage ou **en ce qu'**il produit des ordres de commande d'un équipement domotique de type dispositif d'éclairage, la grandeur de consigne étant la puissance d'éclairage ou **en ce qu'**il produit des ordres de commande d'un équipement domotique de type dispositif de chauffage-climatisation, la grandeur de consigne étant la température.

4. Dispositif selon l'une des revendications précédentes, **caractérisé en ce que** la mémoire est de type monostable, c'est-à-dire comprenant un premier état et un deuxième état, le deuxième état étant activé par le premier signal d'appui, la mémoire retournant automatiquement dans le premier état après une temporisation prédéterminée.

5. Dispositif selon l'une des revendications 1 à 3, **caractérisé en ce que** la mémoire est de type bistable, c'est-à-dire comprenant un premier état et un deuxième état, le passage d'un état à l'autre étant consécutif à l'application du premier signal d'appui.

6. Dispositif selon l'une des revendications 1 à 3, **caractérisé en ce que** la mémoire comprend un registre à décalage (22b) avec n états stables, le premier signal d'appui provoquant le passage d'un état stable quelconque à un état stable suivant du registre et la mémoire repassant dans un premier état stable lorsque le premier signal d'appui est appliqué n fois à la mémoire.

7. Dispositif selon l'une des revendications précédentes, **caractérisé en ce qu'**un deuxième signal d'appui (S4) est activé lors d'une quatrième action (A4) de déplacement de la molette selon l'au moins un autre degré de mobilité, la quatrième action étant différente de la troisième action, par exemple la durée de la quatrième action est supérieure à la durée de la troisième action et/ou la quatrième action est exercée selon une direction différente de celle de la troisième action et/ou la quatrième action est exercée selon un sens différent de celui de la troisième action.

8. Dispositif selon la revendication précédente, **caractérisé en ce que** le deuxième signal d'appui agit également sur l'état de la mémoire.

9. Dispositif selon la revendication 7 ou 8, **caractérisé en ce que** le deuxième signal d'appui est interprété par le dispositif comme un ordre de commande d'arrêt d'exécution d'un ordre en cours d'exécution.

10. Dispositif selon l'une des revendications précédentes, **caractérisé en ce qu'**au moins un autre degré de mobilité est une translation orientée selon une direction sensiblement parallèle à l'axe.

11. Dispositif selon l'une des revendications 1 à 9, **caractérisé en ce qu'**au moins un autre degré de mobilité est une rotation de l'axe de rotation de la molette dans un plan sensiblement perpendiculaire à un plan médian (P2) de la molette.

## Patentansprüche

1. Steuervorrichtung (100), umfassend ein Fernbedienungsgehäuse (10; 10a; 10b; 10c; 10d), das mit einer Wanderrolle (11) ausgerüstet ist, die sich um eine Achse (29) dreht und nach mindestens einem anderen Beweglichkeitsgrad beweglich ist, wobei die Steuervorrichtung einen Speicher aufweist, dessen Zustand sich mindestens bei jeder Übertragung eines ersten Drücksignals (S3; S3a; S3b; S3c, S3d; S4; S4a; S4b; S4c, S4d) ändert, das durch eine dritte Aktion (A3; A3a; A3b; A3c, A3d; A4; A4a; A4b; A4c, A4d) des Bewegens der Wanderrolle nach mindestens einem anderen Beweglichkeitsgrad ausgelöst wird, **dadurch gekennzeichnet, dass** die Steuervorrichtung eine Steuervorrichtung (100) einer Anlage eines Gebäudes (1) ist, dass die Steuervorrichtung Mittel zum Erteilen von Befehlen aufweist, die derartig sind, dass eine erste Aktion (A1) des Drehens der Wanderrolle in einer ersten Richtung um die Achse einen ersten Steuerbefehl (CMD1) oder einen dritten Steuerbefehl (CMD1') in Abhängigkeit von dem Status des Speichers bewirkt, und/oder derartig sind, dass eine zweite Aktion (A2) des Drehens der Wanderrolle in einer zweiten Richtung um die Achse einen zweiten Steuerbefehl (CMD2) oder einen vierten Steuerbefehl (CMD2') in Abhängigkeit vom Speicherstatus bewirkt, und dass:
• der erste, zweite, dritte, vierte Steuerbefehl jeweils eine Änderung einer Sollgröße von einer Heimanlage (60, 70, 80):
- die schrittweise zunehmend ist,
- die schrittweise abnehmend ist,
- zu einem höheren Extremwert,
- zu einem niedrigeren Extremwert betrifft,
oder
• sich der erste Steuerbefehl und der zweite Steuerbefehl an einen ersten Befehlsempfänger richten, der mit einer ersten Heimanlage verbunden ist, während sich der dritte Steuerbefehl und der vierte Steuerbefehl an einen zweiten Befehlsempfänger richten, der mit einer zweiten Heimanlage verbunden ist, wobei der erste und dritte Steuerbefehl jeweils eine schrittweise zunehmende Änderung einer Sollgröße und der zweite und vierte Steuerbefehl jeweils eine schrittweise abnehmende Änderung einer Sollgröße betreffen,
oder
• die Vorrichtung Steuerbefehle einer Heimanlage vom Typ des Aktuators einer motorisierten Sonnenschutzabschirmung erteilt, die einen Behang mit verstellbaren Lamellen und mit einstellbarer Ausfahrlänge aufweist, wobei die Sollgröße die Öffnung der Abschirmung ist, wobei der erste Steuerbefehl ein Befehl zur Ausrichtung der Lamellen in einer ersten Richtung (1+) ist, wobei der zweite Steuerbefehl ein Befehl zur Ausrichtung der Lamellen in einer zweiten Richtung (1-) ist, wobei der dritte Steuerbefehl ein Befehl zum Ausfahren des Behangs (1++) ist und wobei der vierte Befehl ein Befehl zum Zusammenfalten des Behangs (1--) ist.

2. Vorrichtung nach dem vorhergehenden Anspruch, **dadurch gekennzeichnet, dass** sie Steuerbefehle einer Heimanlage vom Typ des Aktuators einer motorisierten Sonnenschutzabschirmung erteilt, die einen Behang mit verstellbaren Lamellen und mit einstellbarer Ausfahrlänge aufweist, wobei die Sollgröße die Öffnung der Abschirmung ist.

3. Vorrichtung nach einem der vorhergehenden Ansprüche, **dadurch gekennzeichnet dass** sie Steuerbefehle einer Heimanlage vom Typ der Verglasung mit einstellbarer Durchlässigkeit erteilt, wobei die Sollgröße die Durchlässigkeit der Verglasung ist, oder dass sie Steuerbefehle einer Heimanlage vom Typ der Beleuchtungsvorrichtung erteilt, wobei die Sollgröße die Beleuchtungsleistung ist, oder dass sie Steuerbefehle einer Heimanlage vom Typ der Heizungs- und Klimatisierungsvorrichtung erteilt, wobei die Sollgröße die Temperatur ist.

4. Vorrichtung nach einem der vorhergehenden Ansprüche, **dadurch gekennzeichnet dass** der Speicher vom monostabilen Typ ist, das heißt, der einen ersten Status und einen zweiten Status aufweist, wobei der zweite Status durch das erste Drücksignal aktiviert wird, wobei der Speicher nach einer vorbestimmten Verzögerungszeit automatisch in den ersten Status zurückkehrt.

5. Vorrichtung nach einem der Ansprüche 1 bis 3, **dadurch gekennzeichnet, dass** der Speicher vom bistabilen Typ ist, das heißt, der einen ersten Status und einen zweiten Status aufweist, wobei der Übergang von einem Status in den anderen infolge des Anlegens des ersten Drücksignals erfolgt.

6. Vorrichtung nach einem der Ansprüche 1 bis 3, **dadurch gekennzeichnet, dass** der Speicher ein Schieberegister (22b) mit n stabilen Status aufweist, wobei das erste Drücksignal den Übergang von einem beliebigen stabilen Status in einen stabilen Status nach dem Register bewirkt und wobei der Speicher in einen ersten stabilen Status zurückkehrt, wenn das erste Drücksignal n Mal an den Speicher angelegt wird.

7. Vorrichtung nach einem der vorhergehenden Ansprüche, **dadurch gekennzeichnet, dass** ein zweites Drücksignal (S4) aktiviert wird, wenn eine vierte Aktion (A4) des Bewegens der Wanderrolle nach mindestens einem anderen Beweglichkeitsgrad ausgelöst wird, wobei sich die vierte Aktion von der dritten Aktion unterscheidet, beispielsweise die Dauer der vierten Aktion größer als die Dauer der dritten Aktion ist und/oder die vierte Aktion in einer anderen Richtung als jener der dritten Aktion ausgeführt wird und/oder die vierte Aktion in einer anderen Ausrichtung als jener der dritten Aktion ausgeführt wird.

8. Vorrichtung nach dem vorhergehenden Anspruch, **dadurch gekennzeichnet, dass** das zweite Drücksignal ebenfalls auf den Status des Speichers einwirkt.

9. Vorrichtung nach Anspruch 7 oder 8, **dadurch gekennzeichnet, dass** das zweite Drücksignal von der Vorrichtung als Steuerbefehl zum Stoppen der Ausführung eines Befehls, der sich in Ausführung befindet, interpretiert wird.

10. Vorrichtung nach einem der vorhergehenden Ansprüche, **dadurch gekennzeichnet, dass** mindestens ein anderer Beweglichkeitsgrad eine Translation ist, die in einer Richtung ausgerichtet ist, die im Wesentlichen parallel zu der Achse ist.

11. Vorrichtung nach einem der Ansprüche 1 bis 9, **dadurch gekennzeichnet, dass** mindestens ein anderer Beweglichkeitsgrad eine Drehung der Drehachse der Wanderrolle in einer Ebene ist, die im Wesentlichen senkrecht zu einer Mittelebene (P2) der Wanderrolle ist.

## Claims

1. Control device (100), comprising a remote control housing (10; 10a; 10b; 10c; 10d) provided with a thumb wheel (11) that is rotationally mobile about an axis (29) and mobile in at least one other degree of mobility, the control device comprising a memory whose state changes at least on each transmission of a first press signal (S3; S3a; S3b; S3c, S3d; S4; S4a; S4b; S4c, S4d) provoked by a third action (A3; A3a; A3b; A3c, A3d; A4; A4a; A4b; A4c, A4d) of displacement of the thumb wheel in the at least one other degree of mobility, **characterized in that** the control device is a control device (100) for an installation of a building (1), **in that** the control device comprises means for transmitting commands such that a first action (A1) of rotation of the thumb wheel in a first direction about the axis provokes a first control command (CMD1), or a third control command (CMD1') according to the state of the memory and/or such that a second action (A2) of rotation of the thumb wheel in a second direction about the axis provokes a second control command (CMD2), or a fourth control command (CMD2') according to the state of the memory and **in that**:
• the first, second, third or fourth control command respectively relates to a modification of a setpoint quantity of a home automation equipment item (60, 70, 80):
- progressively increasing,
- progressively decreasing,
- towards an upper limit value,
- towards a lower limit value,
or
• the first control command and the second control command address a first command receiver connected to a first home automation equipment item, while the third control command and the fourth control command address a second command receiver connected to a second home automation equipment item, the first and third control commands each relating to a progressively increasing modification of a setpoint quantity and the second and fourth control commands each relating to a progressively decreasing modification of a setpoint quantity,
or
• the device produces control commands for a home automation equipment item of the type of actuator of a motorized solar protection screen comprising an awning apron with orientable slats and with adjustable deployment, the setpoint quantity being the opening of the screen, the first control command being a command for orientation of the slats in a first direction (1+), the second control command being a command for orientation of the slats in a second direction (1-), the third control command being a command for deployment of the awning apron (1++) and the fourth command being a command for folding back the awning apron (1--) .

2. Device according to the preceding claim, **characterized in that** it produces control commands for a home automation equipment item of the type of actuator of a motorized solar protection screen comprising an awning apron with orientable slats and with adjustable deployment, the setpoint quantity being the opening of the screen.

3. Device according to one of the preceding claims, **characterized in that** it produces control commands for a home automation equipment item of the type of glazing with adjustable transmission, the setpoint quantity being the transmission of the glazing or **in that** it produces control commands for a home automation equipment item of the type of lighting device, the setpoint quantity being the lighting power or **in that** it produces control commands for a home automation equipment item of the type of heating-air conditioning device, the setpoint quantity being the temperature.

4. Device according to one of the preceding claims, **characterized in that** the memory is of monostable type, that is to say comprising a first state and a second state, the second state being activated by the first press signal, the memory reverting automatically to the first state after a predetermined time delay.

5. Device according to one of Claims 1 to 3, **characterized in that** the memory is of bistable type, that is to say comprising a first state and a second state, the transition from one state to the other following the application of the first press signal.

6. Device according to one of Claims 1 to 3, **characterized in that** the memory comprises a shift register (22b) with n stable states, the first press signal provoking the transition from any stable state to a next stable state of the register and the memory switching back to a first stable state when the first press signal is applied n times to the memory.

7. Device according to one of the preceding claims, **characterized in that** a second press signal (S4) is activated upon a fourth action (A4) of displacement of the thumb wheel in the at least one other degree of mobility, the fourth action being different from the third action, for example the duration of the fourth action is greater than the duration of the third action and/or the fourth action is exerted along a different line from that of the third action and/or the fourth action is exerted in a different direction from that of the third action.

8. Device according to the preceding claim, **characterized in that** the second press signal also acts on the state of the memory.

9. Device according to Claim 7 or 8, **characterized in that** the second press signal is interpreted by the device as a control command to stop execution of a command currently being executed.

10. Device according to one of the preceding claims, **characterized in that** at least one other degree of mobility is a translation oriented along a line substantially parallel to the axis.

11. Device according to one of Claims 1 to 9, **characterized in that** at least one other degree of mobility is a rotation of the axis of rotation of the thumb wheel in a plane substantially at right angles to a median plane (P2) of the thumb wheel.
